# EUROPEAN PATENT SPECIFICATION

(11) **EP 1 734 093 B1**
(45) Date of publication and mention of the grant of the patent: **10.02.2010**
(21) Application number: 05019836.5
(22) Date of filing: 13.09.2005
(51) Int. Cl.: C09J 7/02, C09D 183/04, C08L 83/04, C08K 5/5435

(54) **Silicone release compositions and silicone release plastic films coated therewith**
Silicon Antihaftmittelbeschichtung und damit beschichteter Plastikfilm
Compositions de silicone antiadhésives et les films plastiques revêtus par cette dernière

(30) Priority: 13.06.2005 KR 2005050254
(43) Date of publication of application: 20.12.2006
(73) Proprietor: Toray Saehan Inc., Gumi-City, Kyungsangbuk-do (KR)
(72) Inventor: Lee, Jeong Woo, Gumi-city Kyungsangbuk-do (KR); Lee, Mun Bok, Gumi-city Kyungsangbuk-do (KR); Kim, Sang Pil, Gumi-city Kyungsangbuk-do (KR)
(74) Representative: Sawodny, Michael-Wolfgang

(56) References cited:
- EP-A- 0 536 766
- US-A- 4 313 988

## Description

### BACKGROUND OF THE INVENTION

### Field of the Invention

The present invention relates to a novel silicone release composition and a silicone release plastic film using the same. More particularly, the present invention relates to a silicone release polyester film having excellent stability over time and rub-off property after aging.

### Description of the Related Art

In general, a silicone release agent includes a silicone backbone, silicone curing agent and a catalyst. The silicone backbone comprises vinylpolysiloxane or vinyl group-containing hexenylpolysiloxane and the curing agent comprises hydrogen polysiloxane.

Typically, a release layer may be obtained by applying a release agent onto a substrate such as a plastic film or sheet, paper or non-woven cloth. According to US Patent Nos. 3,076,726, 3,169,884, 3,427,270, 3,900,617, etc., it is known that a silicone layer is applied on a substrate such as a plastic film, cellulose film or paper by using a silicone bath. Additionally, US Patent Nos. 4,667,160 and 5,672,428 disclose the use of a silane coupling agent for improving adhesion between a silicone layer and a substrate. However, such silane coupling agents are problematic in that they are separated out of silicone layers and polyester substrates due to their poor chemical resistance and bath life of coating solution (stability of coating solution). Moreover, it is difficult to produce a silicone release film over a long time by using a coating bath once formed. Briefly, the materials or methods disclosed in the above patents ensuring silicone release property have problems in that it is difficult to carry out release coating for a long time because of poor bath life of coating solution over time.

### SUMMARY OF THE INVENTION

Therefore, the present invention has been made to solve the above-mentioned problems occurring in the prior art. It is an object of the present invention to provide a release composition that comprises a silane coupling agent having a unique structure for improving adhesion to a polyester substrate, chemical resistance and coating solution bath life.

It is another object of the present invention to provide a plastic film coated with the above release composition.

According to an aspect of the present invention, there is provided a silicone release composition comprising a polysiloxane, silane having at least one epoxycyclohexyl group, surfactant and a catalyst.

According to another aspect of the present invention, there is provided a release plastic film such as polyester film coated with the above composition in an in-line coating mode.

### BRIEF DESCRIPTION OF THE DRAWINGS

The above aspects and features of the present invention will be more apparent by describing certain embodiments of the present invention with reference to the accompanying drawings, in which:

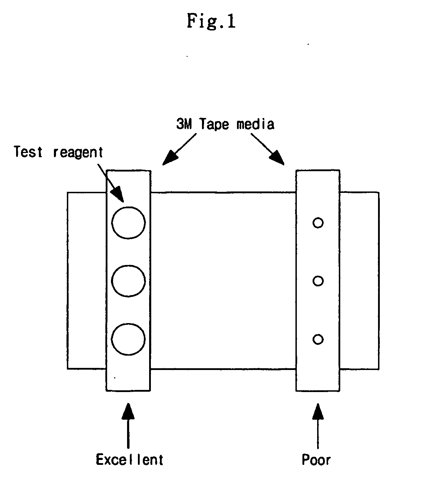

FIG. 1 is a schematic view showing how to test curing characteristics of silicone.

### DETAILED DESCRIPTION OF THE PREFERRED EMBODIMENTS

We have found that when a silane compound having at least one epoxycyclohexyl group (for example, beta-(3,4-epoxycyclohexyl)-alkyltrialkoxysilane or beta-(3,4-epoxycyclohexyl)-alkyltriacetoxysilane) is added to a silicone release composition and the resultant release composition is applied on a substrate such as polyester film, it is possible to obtain a release film that has remarkably improved interfacial adhesion between the polyester film and release coating as well as excellent peel strength. The surfactant is, preferably polyether or lauryl ether, and the catalyst is preferably platinum, rhodium or tin

In one preferred embodiment according to the present invention, the silicone release composition comprises 4-30 wt% of hexenylpolysiloxane or vinylpolysiloxane as release agent, 0.3-3 wt% of hydrogen polysiloxane, 0.002-0.005 wt% of a platinum catalyst and 0.003-0.5 wt% of beta-(3,4-epoxycyclohexyl)-alkyltrialkoxysilane or beta-(3,4-epoxycyclohexyl)-alkyltriacetoxysilane.

Preferably, the silane compound having epoxycyclohexyl groups is present in the composition in an amount of 0.1-10 parts by weight based on 100 parts by weight of polysiloxane.

The vinylpolysiloxane as release agent has an average particle diameter of between 0.01 and 1 µm. The silicone release composition according to the present invention may be applied directly onto various substrates including polyester film, polypropylene film, polyethylene film, polyvinyl chloride film, nylon film, polycarbonate film and laminated film comprising the same plastics; Kraft paper; and nonwoven cloth and woven cloth. Additionally, the composition has a total solid content preferably of between 4 and 30 wt%, more preferably of between 6 and 20 wt%.

When the composition has a solid content of less than 4 wt%, uniform coverage and sufficient release/peel characteristics cannot be obtained.

Beta-(3,4-epoxycyclohexyl)-alkyltrialkoxysilane or beta-(3,4-epoxycyclo hexyl)-alkyltriacetoxysilane is a compound capable of improving interfacial adhesion between a silicone polymer and a substrate such as PET. When the above silane compound is used in an amount of between 0.001 and 1 wt%, preferably of between 0.003 and 0.5 wt%, it is possible to ensure stable physical properties. When the above silane compound is used in an amount of less than 0.003 wt%, interfacial adhesion between a substrate (PET) and silicone is degraded, resulting in generation of unreacted silicone. On the other hand, when the above silane compound is used in a process for manufacturing a PET film in an amount of greater than 0.7 wt%, silicone coating film is cracked during and after an orientation step, resulting in a significant drop in peel characteristics. Meanwhile, the substrate used in the present invention may be corona treated or plasma treated before it is subjected to release coating in order to form a stronger bond between the substrate and release layer. The substrate has a thickness of 2 mm or less, preferably of between 12 and 1500 µm. Additionally, the substrate may be preliminarily subjected to chemical treatment, on the surface to be coated with a release layer, by using a currently used primer layer such as beta-(3,4-epoxycyclohexyl)-alkyltrialkoxysilane in order to reinforce chemical bonding.

Preferably, the release composition is applied to a coating thickness of between 0.1 and 2 µm after orientation and drying steps. Additionally, the polyester film coated with a silicone release composition has a number average surface roughness suitably of between 0.01 and 2 µm, more preferably of between 0.01 and 1.0 µm. When the coating thickness after drying is greater than 2 µm, a so-called blocking phenomenon occurs so that a silicone-coated surface and non-coated surface are caused to be wound under a certain pressure. Moreover, a so-called rub-off phenomenon occurs after aging (24 hours, 50°C, 95% RH). Such rub-off phenomenon of a silicone layer is caused by insufficient adhesion between a silicone layer and substrate, and is a serious problem in the case of a release composition free from beta-(3,4-epoxycyclohexyl)-alkyltrialkoxysilane, as demonstrated by the following examples and comparative examples. Meanwhile, the process for heat curing, drying and orienting the release layer-coated substrate is carried out in such a manner that orientation ratio is 2.5-12, drying/curing temperature ranges from 60°C to 250°C, drying air flow rate ranges from 8 to 40 m/s, and that retention time in a drier ranges from 0.5 seconds to 10 minutes, preferably from 1 second to 1 minute.

Additionally, when the polyester release film obtained by in-line application of the above silicone release composition is evaluated for thermal stability, it is preferable that the polyester release film has a heat shrinkage of between 0.5% and 1.5% in the longitudinal direction and of between -0.03% and 1.0% in the transverse direction. It is more preferable that the polyester release film has a heat shrinkage of between 0.3% and 1% in the longitudinal direction and of between -0.01% and 0.4% in the transverse direction.

When the release film has a heat shrinkage of greater than 0.5% in the transverse direction under conditions of 150°C/30 minutes, it is not suitable for applications using hot-melt adhesives, because each of the silicone layer and polyester layer of the release film has a different heat conductivity in the transverse direction upon instant shrinkage or expansion, while a hot-melt adhesive is laminated to the release film in the vertical direction.

The beta-(3,4-epoxycyclohexyl)-alkyltrialkoxysilane used in the present invention has a structure represented by the following formula: 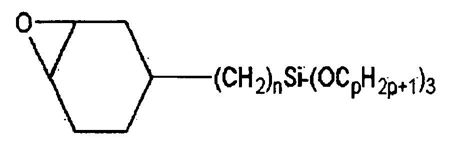 wherein n is an integer of 0 or more and p is an integer of 1 or more.

A typical example of the above compound is represented by the following formula:

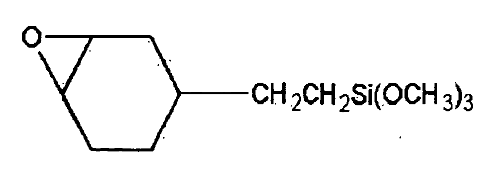

Typical examples of the silicone that may be used in the present invention include the following compounds: 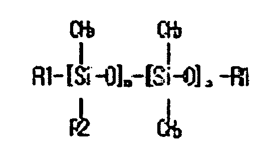 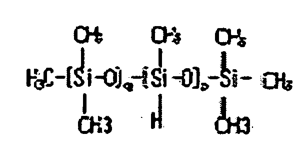 wherein R1 is CH=CH₂, R2 is CH₂-CH₂-CH₂-CH₂-CH=CH₂ or CH₃, and each of p and q represents an integer of 0 or more.

**EXAMPLE**

The silicone release composition comprising the compounds represented by the above formulae was applied onto a polyester film in an in-line coating mode during a manufacturing process of the polyester film. Such in-line coating may be carried out by a gravure coating, wire bar coating, grooved coating, comma coating, or MPG (Multi-Pressure-Gravure) 5 R/O or 6 R/O coating process. The plastic film to be coated with the silicone release composition is a uniaxially oriented film obtained by corona treatment or plasma treatment of a non-oriented sheet; a sequentially biaxially oriented film obtained by corona treatment or plasma treatment and sequential stretching of a non-oriented sheet; or a simultaneously biaxially oriented film obtained by corona treatment or plasma treatment and simultaneous stretching of a non-oriented sheet.

The substrate used in this example was SD500-23, 30, 38 or 50 µm substrate developed by the present inventors and commercially available from TORAY SAEHAN Co., as release carrier for MLCCs (multi-layer ceramic capacitors).

**Test for Evaluation of Physical Properties**

To measure peel strength, an instrument available from Chem. Instrument, Co., as Model AR1000 was used. As reference adhesive tape, TESA7475 (trade name) laminated to the surface of a silicone release film under a load of 2 kgf was used. Additionally, a convection oven available from Heraeus Co., as Model HC4033 was used in order to measure peel strength before and after thermal aging. The peel strength was measured under 180° peel conditions at a peel rate of 0.3 m/minute by using a sample of 4 cm X 15 cm size, in a measurement region of 100 mm (length) X 25.4 mm (width). The measured peel strength was expressed in g/inch units and recorded as average value of five measurements.

Peel Strength of Adhesive Tape

A film cured after silicone coating was laminated with an adhesive tape (TESA7425) on its silicone-coated surface under a load of 2 kgf to provide a laminated film. An iron bar of 70 g/cm² was disposed on the release film and the resultant structure was stored under 23°C/50% RH conditions for 24 hours. Then, 180° peel strength was measured at a peel rate of 0.3 m/minute by using an instrument, AR1000 available from Chem. Instrument, Co.

Determination of Silicone Curing Characteristics

A 3M 810 adhesive tape was attached to a silicone release layer and detached again. Then, a drop of the following test reagent was added on the adhesive tape and a curing degree was evaluated according to the size of a spot formed by the test reagent. It is understood that the spot size is determined depending on degrees of separation of unreacted silicone by the adhesive tape. Generally, when the test reagent is dropped onto a tape, a relatively large spot is formed. On the contrary, when the test reagent is dropped onto a tape stained with unreacted silicone, a relatively small spot is formed.

Test Reagent= IPA (isopropyl alcohol) + pigment (mixed at a predetermined ratio). IPA cannot dissolve a silicone-coated surface, while it can dissolve the 3M810 adhesive tape. Silicone release layers are graded by spot sizes in terms of "excellent", "good", "moderate" and "poor" (see, Table 1).

Rub-Off Properties after Aging

To evaluate rub-off properties after aging, an instrument available from JEIOTECH, Co., as model TH-I-180 was used. After a silicone-coated film was stored under 50°C/95% RH conditions for 2 months, the silicone release layer was rubbed strongly with a finger to perform a rub-off test for measuring a degree of separation of the silicone layer from a polyester film. From the rub-off test, it was possible to measure the interfacial adhesion between a cured silicone layer and a PET film.

Chemical Resistance

To measure chemical resistance, a stick with a cotton tip was wetted with MEK (methyl ethyl ketone), toluene, IPA (isopropyl alcohol) or 1,4-BD (1,4-butanediol), and then a silicone coating layer was rubbed strongly with the cotton tip to determine whether silicone was separated or not.

**[Table 1]**

| | | | | | | | | | |
|---|---|---|---|---|---|---|---|---|---|
| Item | Release Composition (wt%) | | | | Peel Strength (average) | Curing Degree | Chemical Resistance | Coating Thickness After Drying | Rub-Off After Aging |
| | A | B | C | D | | | | | |
| Ex. 1-1 | 12 | 0.02 | 0.03 | 0.002 | 7.5 | Ⓞ | Ⓞ | 0.8 | ○ |
| Ex. 1-2 | 12 | 0.02 | 0.02 | 0.002 | 14 | Ⓞ | Ⓞ | 0.3 | Ⓞ |
| Ex. 1-3 | 12 | 0.02 | 0.01 | 0.002 | 16 | Ⓞ | Ⓞ | 0.24 | Ⓞ |
| Ex. 1-4 | 12 | 0.02 | 0.04 | 0.002 | 22 | ○ | ○ | 0.1 | ○ |
| Comp. Ex. 1-1 | 12 | 0.02 | 0.7 | 0.002 | 29 | △ | △ | 0.24 | △ |
| Comp. Ex. 1-2 | 12 | 0.02 | 0.001 | 0.002 | 17 | ∇ | ∇ | 0.3 | ∇ |
| Comp. Ex. 1-3 | 12 | 0.02 | 0 | 0.002 | 26 | ∇ | ∇ | 0.1 | ∇ |
| Ref. | A: vinylpolysiloxane, B: hydrogen polysiloxane, C; beta-(3,4-epoxycyclohexyl)-ethyltrimethoxysilane, | | | | | | | | |
| | D: chelated platinum catalyst | | | | | | | | |
| | Ⓞ: excellent, ○: good, △: moderate, ∇: poor | | | | | | | | |

As can be seen from Table 1, silicone release compositions comprising beta-(3,4-epoxycyclohexyl)-ethyltrimethoxysilane according to Examples 1-3 provide excellent interfacial adhesion and release properties when they are coated on the surface of a corona-treated polyester film. Particularly, in the silicone release compositions according to Examples 1-3, the silicone release layers show improved interfacial adhesion by virtue of chemical bonding, and thus are easily peeled off after the lamination with a reference adhesive tape. Additionally, the silicone release layers show excellent solvent resistance and stability over time, as can be seen from the above test wherein each silicone release layer is rubbed strongly with a finger after being stored under 50°C/95% RH conditions for 2 months.

On the contrary, silicone release compositions free from beta-(3,4-epoxycyclohexyl)-ethyltrimethoxysilane according to Comparative Examples 1-3 show a so-called ribbing phenomenon (defects in the form of stripes) when they are coated on a substrate and provide unstable peel strength and poor stability over time. Comparative Examples 1-3 provide data showing variations in physical properties and stability over time depending on the viscosity and coating thickness (after drying) of wet silicone release compositions not using beta-(3,4-epoxycyclohexyl)-ethyltrimethoxysilane. According to the data, the so-called rub-off phenomenon becomes serious as coating thickness increases.

As can be seen from the above Example, beta-(3,4-epoxycyclohexyl)-alkyltrialkoxysilane or beta-(3,4-epoxycyclohexyl)-alkyltriacetoxysilane used in the present invention ensures smoothness of a release coating layer and uniform interfacial adhesion between a polyester substrate and a silicone release layer. Additionally, although it is generally difficult to prevent generation of static electricity and to ensure flowability at the backside of the polyester substrate opposite to the silicone-coated surface, the silicone release composition according to the present invention can be applied during a manufacturing process of a polyester film in an in-line mode so that at least two steps may be eliminated from a user process, thereby reducing the overall cost and preventing problems adversely affecting the product quality.

Meanwhile, in the case of commercially available silicone, it is not possible to completely (100%) cure the silicone release layer. Therefore, it is inevitable that unreacted hydrogen polysiloxane and vinylpolysiloxane or hexenylpolysiloxane remain as residues in the release composition according to the present invention. When such unreacted residues are exposed to the air for a long time, they are electronegatively ("-") charged, and thus form strong bonds with the electropositively ("+") charged dust or foreign materials in the air. Such electrochemical bonds may serve as crosslinker between a release film or release paper and an adhesive. In this case, a release layer with very high releasability is realized. Moreover, when the release coating bath is used, they can show excellent curing characteristics and stability in peel strength even if they are exposed to the exterior with undesirable surroundings.

Meanwhile, silicone (polysiloxane) has a unique structural characteristic in that rotational energy between a silicon atom and oxygen atom is substantially 0 kJ. Due to the above structural characteristic, a conventional silicone release composition shows poor air permeability after it is coated on a substrate and then dried. In addition to such poor air permeability, a conventional silicone release composition shows a delayed rub-off phenomenon due to the hydrolysis under effect of water generated after the reaction of polyester with hydrogen polysiloxane as curing agent. In other words, when a dried silicone release film is subjected to effect of water for a relatively long time and then the release film is rubbed with a finger, the film is rubbed off significantly. However, according to the present invention, such problems can be solved by using a silane coupling agent having a unique molecular structure in a silicone bath. Therefore, when the silicone release composition according to the present invention is coated on a polyester substrate and dried, it is possible to obtain excellent interfacial adhesion between the silicone coating layer and polyester.

As described above, the release film obtained by coating a silicone release composition uniformly onto a polyester film during a manufacturing process thereof in an in-line coating mode can be used as release film with high and preferential quality in various applications. Such applications include carrier release films used for manufacturing adhesive labels, polarized films and multi-layer ceramic capacitors; LCD protection release films that permit lamination with solar control adhesive films; overlamination films; medical patches; FPC (flexible printed circuit) protection films; electrocardiographic protection films; and the like.

The foregoing embodiment and advantages are merely exemplary and are not to be construed as limiting the present invention. The present teaching can be readily applied to other types of release films.

## Claims

1. A silicone release composition comprising 4-30 wt% of hexenylpolysiloxane or vinylpolysiloxane as release agent, 0.3-3 wt% of hydrogen polysiloxane, 0.002-0.005 wt% of platinum, rhodium or tin catalyst and 0.003-0.5 wt% of beta-(3,4-epoxycyclohexyl)-alkyltrialkoxysilane or beta-(3,4-epoxycyclohexyl)-alkyltriacetoxy-silane, represented by the following formula, or a mixture thereof: 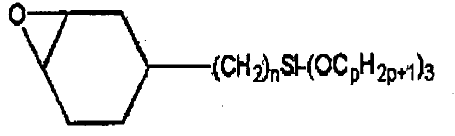 wherein n is an integer of 0 or more; p is an integer of 1 or more; and the trialkoxy moiety may be a methoxy group, ethoxy group.

2. A plastic release film obtained by coating the silicone release composition as claimed in Claim 1 onto either or both surfaces of a plastic film to a predetermined coating thickness, through an in-line coating step during a manufacturing process of the plastic film, in order to form a silicone release layer.

3. The plastic release film as claimed in claim 2, wherein the plastic film to be coated with the silicone release composition is an uniaxially oriented film obtained by corona treatment or plasma treatment of a non-oriented sheet; a sequentially biaxially oriented film obtained by corona treatment or plasma treatment and sequential stretching of a non-oriented sheet; or a simultaneously biaxially oriented film obtained by corona treatment or plasma treatment and simultaneous stretching of a non-oriented sheet.

4. The plastic release film as claimed in claim 2, wherein the plastic film is a polyester film, polyethylene film, polypropylene film, nylon film, polycarbonate film, polyvinyl chloride film, or a polyvinyl acetate (PVA) film.

5. The plastic release film as claimed in claim 2, which has a coating thickness after drying of between 0.06 µm and 2 µm.

## Patentansprüche

1. Silikon-Trennzusammensetzung, umfassend 4 - 30 Gew.-% Hexenylpolysiloxan oder Vinylpolysiloxan als Trennmittel, 0,3 - 3 Gew.-% Wasserstoff-Polysiloxan, 0,002 - 0,005 Gew.-% Platin-, Rhodium- oder Zinnkatalysator und 0,003 - 0,5 Gew.-% beta-(3,4-Epoxycyclohexyl)-alkyltrialkoxysilan oder beta-(3,4-Epoxycyclohexyl)-alkyltriacetoxysilan, dargestellt durch die folgende Formel, oder eine Mischung daraus: 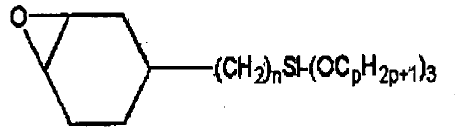 wobei n eine Ganzzahl im Wert von 0 oder mehr ist, p eine Ganzzahl im Wert von 1 oder mehr ist und der Trialkoxy-Rest eine Methoxygruppe oder Ethoxygruppe sein kann.

2. Kunststoff-Trennfilm, erhalten, indem die Silikon-Trennzusammensetzung nach Anspruch 1 mit einer vorbestimmten Beschichtungsdicke auf eine oder beide Seiten eines Kunststofffilms beschichtet wird, und zwar durch einen Inline-Beschichtungsschritt während des Verfahrens zur Herstellung des Kunststofffilms, um eine Silikon-Trennschicht zu bilden.

3. Kunststoff-Trennfilm nach Anspruch 2, wobei der mit der Silikon-Trennzusammensetzung zu beschichtende Kunststofffilm Folgendes ist: ein uniaxial ausgerichteter Film, der durch Coronabehandlung oder Plasmabehandlung einer nicht ausgerichteten Folie erhalten wird; ein sequentiell biaxial ausgerichteter Film, der durch Coronabehandlung oder Plasmabehandlung und nachfolgendes Strecken einer nicht ausgerichteten Folie erhalten wird; oder ein simultan biaxial ausgerichteter Film, der durch Coronabehandlung oder Plasmabehandlung und gleichzeitiges Strecken einer nicht ausgerichteten Folie hergestellt wird.

4. Kunststoff-Trennfilm nach Anspruch 2, wobei der Kunststofffilm ein Polyesterfilm, ein Polyethylenfilm, ein Polypropylenfilm, ein Nylonfilm, ein Polycarbonatfilm, ein Polyvinylchloridfilm oder ein Polyvinylacetatfilm (PVA-Film) ist.

5. Kunststoff-Trennfilm nach Anspruch 2, der nach dem Trocknen eine Beschichtung mit einer Dicke zwischen 0,06 µm und 2 µm aufweist.

## Revendications

1. Composition de démoulage au silicone contenant 4 à 30 % en poids d'hexénylpolysiloxane ou de vinylpolysiloxane servant d'agent de démoulage, 0,3 à 3 % en poids d'hydrogel de polysiloxane, 0,002 à 0,005 % en poids de catalyseur au platine, au rhodium ou à l'étain et 0,003 à 0,5 % en poids de bêta-(3,4-époxycyclohexyl)-alkyltrialkoxysilane ou de bêta-(3,4-époxycyclohexyl)-alkyltriacétoxysilane, représenté par la formule suivante, ou un mélange de ceux-ci : 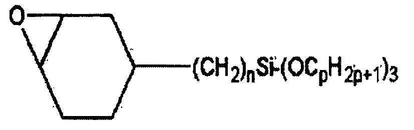 où n est un nombre entier égal ou supérieur à 0 ; p est un nombre entier égal ou supérieur à 1 ; et la fraction trialkoxy peut être un groupement méthoxy ou un groupement éthoxy.

2. Film plastique de démoulage obtenu par application de la composition de démoulage au silicone selon la revendication 1 sur une face ou les deux faces d'un film plastique sur une épaisseur d'enduction prédéterminée pendant une étape d'enduction en ligne au cours d'un processus de fabrication du film plastique, afin de former une couche de démoulage au silicone.

3. Film plastique de démoulage selon la revendication 2, dans lequel le film plastique à enduire avec la composition de démoulage au silicone est un film à orientation uniaxiale obtenu par traitement corona ou traitement au plasma d'une feuille non orientée ; un film à orientation biaxiale obtenu par traitement corona ou traitement au plasma et étirement séquentiel d'une feuille non orientée ; ou un film à orientation biaxiale simultanée obtenu par traitement corona ou traitement au plasma et étirement simultané d'une feuille non orientée.

4. Film plastique de démoulage selon la revendication 2, dans lequel le film plastique est un film de polyester, un film de polyéthylène, un film de polypropylène, un film de nylon, un film de polycarbonate, un film de polychlorure de vinyle ou un film de polyacétate de vinyle (PVA).

5. Film plastique de démoulage selon la revendication 2, qui possède une épaisseur d'enduction après séchage comprise entre 0,08 µm et 2 µm.
